# EUROPEAN PATENT APPLICATION

(11) **EP 4 059 979 A1**
(43) Date of publication of application: **21.09.2022**
(21) Application number: 21163462.1
(22) Date of filing: 18.03.2021
(51) Int. Cl.: C08G 63/08, C08G 63/78, C08G 63/82

(54) **A PROCESS OF CONTINUOUSLY MANUFACTURING A POLY(HYDROXY ACID) HOMO- OR COPOLYMER WITH TUNABLE MOLECULAR WEIGHT, STRUCTURE AND COMPOSITION**

(71) Applicant: Sulzer Management AG, 8401 Winterthur (CH)
(72) Inventor: LUK, Ho Ting Harris, 8307 Effretikon (CH); MARALDI, Matteo, 20127 Milan (IT)
(74) Representative: Henkel & Partner mbB

(57) **Abstract**

A process of continuously manufacturing a poly(hydroxy acid) homo- or copolymer comprising the step of polymerizing as at least one monomer, one or more cyclic esters of hydroxy acid in the presence of at least one catalyst in a reactor system by ring-opening-polymerization to the poly(hydroxy acid) homo- or copolymer, wherein the molar ratio of the total amount of the one or more cyclic esters to the total amount of the at least one catalyst applied during the ring-opening-polymerization is more than 10,000, wherein the reactor system comprises at least one of a continuous stirred-tank reactor, of a loop reactor and of a plug flow reactor, and wherein at least one of these reactors of the reactor system comprises at least one mixer and/or at least one heat transfer element.

## Description

The present invention relates to a process of continuously manufacturing a poly(hydroxy acid) homo- or copolymer by polymerizing as at least one monomer, one or more cyclic esters of hydroxy acid in the presence of at least one catalyst and optionally one initiator by ring-opening-polymerization.

Poly(hydroxy acid) homo- or copolymers are of particular interest, because they can be obtained from renewable resources and are mostly compostable and/or biodegradable. Moreover, the technological properties of these polymers come quite close to the properties of those polymers derived from fossil-based resources, which explains why these polymers are regarded as highly promising substitutes for the latter. One example for a commercially important poly(hydroxy acid) homopolymer is polylactic acid, which is based on an α-hydroxy acid lactic acid and which has a wide range of applications. For instance, polylactic acid is used in the biomedical field in chirurgical implants, in films, such as e.g. in packaging, in fibers, such as e.g. for garments, in hygienic articles, in carpets and in disposable plastic products, such as e.g. disposable cutlery or containers. Moreover, polylactic acid has found wide application in composite materials, such as in fiber-reinforced plastics. Another important example for a respective poly(hydroxy acid) homopolymer is polycaprolactone, which is derived from a cyclic ester, caprolactone, originated from the intramolecular esterification of hydroxy acid caprolic acid. This polymer finds widespread applications in the production of speciality polyurethanes and is characterized by a good resistance to water, to oil and to solvent. Other examples are polyglycolic acid, polyvalerolactone and the like. Poly(hydroxy acid) copolymers are interesting alternatives, since by appropriate selection of the comonomers and their relative amounts to each other and by adjusting an appropriate molecular weight, certain properties of the copolymers may be tailored to the intended use.

Generally, two alternative principal methods are known for synthesizing poly(hydroxy acid) homo- or copolymers. The first principal method is the direct polycondensation of one or more aliphatic hydroxy acid(s) to the respective homopolymer or copolymer, respectively, such as the direct polycondensation of lactic acid to polylactic acid. However, this principal method only leads to low molecular weight (co)polymers and is thus limited to specific (co)polymers. The second principal method is the ring-opening-polymerization of one or more cyclic esters of hydroxy acid(s), such as the ring-opening-polymerization of lactide (which is the cyclic diester of lactic acid), glycolide (which is the cyclic diester of glycolic acid), lactones or the like. This is the preferred method nowadays for the industrial production of polylactic acid and other poly(hydroxy acid) homo- or copolymers. The cyclic diesters may be produced by intramolecular esterification of an aliphatic hydroxy acid, such as in the case of a lactone, for instance caprolactone, or by condensation of two hydroxy acid molecules into a cyclic diester, such as condensation of lactic acid to lactide or condensation of glycolic acid to glycolide. Alternatively, the cyclic ester, such as in particular cyclic diester may be produced by first oligomerizing a hydroxy acid and then subjecting the oligomer to a depolymerization reaction in order to obtain the cyclic diester. For instance, lactide is often prepared by the latter method, for instance by fermentation of carbohydrates from biomass, such as starch, sugar or corn resulting in lactic acid, by then oligomerizing the lactic acid and by afterwards subjecting the oligomers to a depolymerization reaction in order to obtain lactide. After purification, the one or more cyclic esters of hydroxy acid as monomer(s) are then polymerized in the presence of a catalyst and optionally an initiator to form high molecular weight polymer. The unreacted cyclic ester has to be removed after the polymerization to a final concentration of less than at least 0.5 % by weight, in order to obtain a product of marketable quality. Such a removal of unreacted cyclic ester may be achieved for instance in the case of lactide by means of at least one devolatilization step conducted at elevated temperature and reduced pressure. For example, a two-stage devolatilization process can be performed in order to obtain the required degree of lactide removal and thus to obtain a polymer having the required quality. In order to terminate the polymerization reaction, an inhibitor is usually added to the polymeric product at the end of the polymerization and before or after the first devolatilization step. Alternatively, residual monomers can be removed by dissolving the monomer and polymer mixture in a solvent such as 1,1,1,3,3,3-hexafluoro-2-propanol (HFIP), dichloromethane (DCM) and chloroform and reprecipitate the monomer-free polymer with an anti-solvent such as methanol, acetone and hexane. Still, this latter method is less preferable in an industrial scale, considering the heavy solvent consumption and long dissolution time.

Thus, a typical process of preparing a polylactic acid comprises the steps of i) carrying out a ring-opening-polymerization of lactide in the presence of a catalyst for ring-opening-polymerization of the lactide to polylactic acid, ii) adding a compound capable of deactivating the catalyst to the resulting reaction mixture and iii) reducing the pressure in a reactor containing the reaction mixture and/or allowing an inert gas to pass through the reactor to remove unreacted lactide from the polylactic acid by devolatilization. Usually, two subsequent devolatilization steps are performed and the vapor streams enriched in lactide are recycled to the polymerization reactor.

A major drawback of the current processes of preparing poly(hydroxy acid) homopolymers, but essentially copolymers, regardless of ring-opening polymerization or polycondensation is that they require, in particular if (co)polymers with comparably high molecular weight and/or (co)polymers with a branched structure shall be prepared, a long reaction time of 8 to 24 hours or even up to 72 hours. Moreover, usually comparably high amounts of catalyst, namely between 300 and 10,000 ppm (equivalent to the molar ratio of the total amount of the one or more cyclic esters to the total amount of the at least one catalyst applied between 280 and 9000), are required. In addition, the commercial industrial processes of preparing poly(hydroxy acid) homo- and copolymers are mostly batch processes. Another important drawback is that the processes are not flexible enough to enable an easy transition from the production of a certain (co)polymer with a certain molecular weight and structure to another (co)polymer of the same type but with a different molecular weight and structure. Even though certain continuous processes were proposed, they either required the use of (supercritical) solvent carrier (as in US9346915B2 and in US5525671A), focused mainly on the monomer removal process of a homopolymer (as in US7119163B2), or utilized a completely different technology such as extrusion (as in US5882787A and in US5656718A).

Accordingly, the object underlying the present invention is to provide a process of continuously manufacturing a poly(hydroxy acid) homo- or copolymer by a ring-opening-polymerization, which requires only a comparable short reaction time even in the case that a poly(hydroxy acid) homo- or copolymer with a comparable high molecular weight and/or even when a complex branched structure shall be prepared. Moreover, the process shall allow - with the same reactor system - to easily vary the molecular weight and structure of the (co)polymer according to the need, in turn enabling an easy transition from the production of a certain (co)polymer with a certain molecular weight and structure to another (co)polymer of the same type, such as from a linear (co)polymer to a branched (co)polymer.

In accordance with the present invention this object is satisfied by providing a process of continuously manufacturing a poly(hydroxy acid) homo- or copolymer comprising the step of polymerizing as at least one monomer, one or more cyclic esters of hydroxy acid in the presence of at least one catalyst in a reactor system by ring-opening-polymerization to the poly(hydroxy acid) homo- or copolymer, wherein the molar ratio of the total amount of the one or more cyclic esters to the total amount of the at least one catalyst applied during the ring-opening-polymerization is more than 10,000, wherein the reactor system comprises at least one of a continuous stirred-tank reactor, of a loop reactor and of a plug flow reactor, and wherein at least one of these reactors of the reactor system comprises at least one mixer and/or at least one heat transfer element.

This solution bases on the surprising finding that the combination 1) of using a continuous process, 2) of using a comparable high molar ratio of the total amount of the one or more cyclic esters to the total amount of the at least one catalyst applied during the ring-opening-polymerization of more than 10,000 and 3) of using a reactor system, which comprises at least one of a continuous stirred-tank reactor, of a loop reactor and of a plug flow reactor, and wherein at least one of these reactors comprises at least one mixer and/or at least one heat transfer element for homogeneously mixing and/or distributing the heat the mixture flowing through the respective reactor, allows to reduce the total residence time in the system, - based on an overall monomer conversion of at least 95% and even up to 99.5% - to as low as 2 hours, 1.5 hours or even less, even if using usual catalysts. This was unexpected, because it would have been expected that by increasing the molar ratio of the total amount of the one or more cyclic esters to the total amount of the at least one catalyst applied during the ring-opening-polymerization, i.e. by reducing the amount of catalyst used per mole of monomer, the residence time would prolong, i.e. time required to achieve a (co)polymer with a certain molecular weight at a certain conversion, or - in the best case - would leave it unchanged. More specifically, the use of one or more mixing and/or heat transfer elements allows to assure a homogeneous mixture within the reactor system without significant heat and concentration gradients within the reactor system except the decrement of (co)monomer concentration throughout the reactor system due to the polymerization and the concentration increment of components after a feeding point. Thereby, an effective mixing of the reactants as well as an efficient heat removal from the highly viscous reaction mixture are assured so that the process remains - even at a comparable high reaction temperature of up to 220°C or even above and at a low concentration of catalyst - reliably controllable and stable without undesired degradation of components of the reaction mixture or the creation of undesired by-products, such as colored by-products, within the reactor system. Moreover, the specific combination of the three aforementioned features and in particular the specific reactor system and the continuous ring-opening-polymerization allows, as in further detail set out below, to easily adapt - with the same reactor system - the molecular weight and structure of the (co)polymer to the need. In other words, the process in accordance with the present invention allows to produce - with the same reactor system - (co)polymers of different molecular weights (grades), structures and compositions, for instance by varying the temperature, the initiator contents and/or catalyst contents, and/or the number and/or location of feeding points, at which one or more monomers, catalyst and/or optional initiator are added into the reactor. Thus, with one and the same reactor system (co)polymers with different molecular weights, either linear or branched, and in case of copolymers either in form of random or block copolymers may be produced. In particular, the process can enable an easy transition from the production of a certain (co)polymer with a certain molecular weight and structure, such as a linear copolymer of lactic acid and caprolactone, to another (co)polymer of the same type, such as to a branched copolymer of lactic acid and caprolactone. More specifically, by using more than one feeding point for feeding (co)monomer(s) into the at least one continuous stirred-tank reactor, the at least one loop reactor and/or the at least one plug flow reactor and by suitably selecting the optional initiator, the design of the polymer architecture may be tailored to the need, wherein the number of feeding points controls the number of blocks in the polymer chains. By tuning the residence time of the monomer(s), catalyst and optional initiator between the single feeding points and by appropriately adjusting the amounts of catalyst and optional initiator, the chain length of the blocks and thus the molecular weight of the copolymer may be controlled. Moreover, by adjusting the initial and intermediate feed compositions, the composition and structure of the polymer chain and the reaction rate may be controlled. Furthermore, by using an appropriate type of initiator, it may be controlled whether the (co)polymer is linear or branched. On account of the aforementioned reasons, the process in accordance with the present invention is well suited to produce branched poly(hydroxy acid) homo- and copolymers, which are superior compared to linear polylactic acid, since such branched (co)polymers are usually less brittle and have a higher toughness and impact resistance than linear polylactic acid. Such branched (co)polymers are, if at all, only producible with prior art methods with difficulty.

Reactor system means in accordance with the present invention the combination of all reactors and lines connecting them with each other used for the process, i.e. for instance the combination of at least one continuous stirred-tank reactor and/or at least one loop reactor and/or at least one plug flow reactor, in which the process is conducted.

At least one plug flow reactor means in accordance with the present invention a plug flow section with one or more feeding points.

Preferably, the molar ratio of the total amount of the one or more cyclic esters (i.e. of all of the (co)monomers) to the total amount of the at least one catalyst applied during the ring-opening-polymerization is at least 11,000. More preferably, the respective molar ratio is at least 12,000, yet more preferably at least 15,000, still more preferably at least 20,000, yet more preferably at least 25,000 and most preferably at least 27,000, such as about 28,000. Good results are in particular obtained, when the respective molar ratio is less than 280,000, more preferably less than 140,000 and most preferably less than 56,000.

In accordance with a further preferred embodiment of the present invention at least a part of the ring-opening-polymerization is carried out at a temperature of 160°C or more. For instance, the temperature of the ring-opening-polymerization within a part of the at least one continuous stirred-tank reactor and/or of the at least one loop reactor and/or of the at least one plug flow reactor may be 160°C or more, whereas the temperature in another part of the at least one continuous stirred-tank reactor and/or at least one loop reactor and/or of the at least one plug flow reactor may be less than 160°C. Alternatively, the temperature of the ring-opening-polymerization within the whole of the at least one continuous stirred-tank reactor and/or at least one loop reactor and/or of the at least one plug flow reactor may be 160°C or more. However, it is most preferred that the temperature throughout all of the reactors of the reactor system, i.e. in all of the continuous stirred-tank reactors, loop reactors, plug flow reactors and optional any further reactor, is 160°C or more. The adjustment of this temperature range, which is slightly higher in comparison to the temperature range used in commercial production processes, allows to enhance the reaction kinetic and thus shorten the reaction time, i.e. to decrease the residence time of the reaction mixture within the reactor system, however, surprisingly without making the process uncontrollable, which would lead to a degradation of components of the mixture within the reactor system and in particular of the produced (co)polymer, to the formation of colored by-products and the like. Without the intention to be bound to any theory, it is considered that this is due to the high molar ratio of (co)monomers to the catalyst, i.e. to the comparable low concentration of catalyst in the reaction mixture. In other words, it is considered that the comparable low concentration of catalyst in the reaction mixture allows to increase the reaction temperature at least slightly, without leading to an uncontrollable process. Good results are in particular obtained, when the ring-opening-polymerization is at least partially and more preferably completely carried out at a temperature of at least 160°C, preferably at a temperature of 160°C to 220°C, more preferably at a temperature of 170°C or more to 215°C, even more preferably at a temperature of 175°C or more to 210°C and most preferably at a temperature of 180°C or more to 200°C.

In accordance with another preferred embodiment of the present invention, the content of the at least one catalyst applied during the ring-opening-polymerization is between more than 0 ppm and 200 ppm or less based on the reaction mixture. If there are two or more feeding points for adding monomer and/or catalyst into the reaction system so that the concentration of catalyst in the reaction mixture may be higher downstream of a first feeding point, the maximum amount of the at least one catalyst applied during the ring-opening-polymerization in the reaction mixture in sum at any location in the reaction system is between more than 0 ppm and 200 ppm or less based on the reaction mixture. Good results are in particular obtained, when the content of the at least one catalyst applied during the ring-opening-polymerization is between 1 ppm and 180 ppm, more preferably between 10 ppm and 150 ppm, still more preferably between 20 ppm and 100 ppm and most preferably between 50 ppm and 100 ppm.

The present invention is not particularly limited concerning the type of (co)monomers used. Preferably, the (co)monomers, i.e. the at least one cyclic ester is selected from the group consisting of lactide, glycolide, caprolactone, valerolactone, decanolactone, butyrolactone, dodecalactone, octanolactone and any combination of two or more of the aforementioned compounds. More preferably the at least one cyclic ester is selected from the group consisting of L-lactide, D-lactide, meso-lactide, lactide racemic mixture, glycolide, ε-caprolactone, γ-caprolactone, δ-valerolactone, γ-valerolactone, 5-decanolactone, δ-decanolactone, δ-butyrolactone, 6-dodecalactone, 5-dodecalactone, δ-octanolactone and any combination of two or more of the aforementioned compounds.

Even more preferably, during the ring-opening-polymerization i) a lactide is polymerized so as to manufacture a polylactide or ii) a caprolactone is polymerized so as to manufacture a polycaprolactone or iii) a glycolide is polymerized so as to manufacture a polyglycolide or iv) a lactide and a caprolactone are polymerized so as to manufacture a poly(lactide-co-caprolactone) or v) a lactide and a glycolide are polymerized so as to manufacture a poly(lactide-co-glycolide). Still more preferably, the at least one cyclic ester i) is selected from L-lactide, D-lactide, meso-lactide, lactide racemic mixture and any combination of two or more of the aforementioned compounds, or ii) is ε-caprolactone and/or γ-caprolactone or iii) is glycolide or iv) is a mixture of at least one compound being selected from L-lactide, D-lactide, meso-lactide, lactide racemic mixture and any combination of two or more of the aforementioned compounds and ε-caprolactone and/or γ-caprolactone or is a mixture of at least one compound being selected from L-lactide, D-lactide, meso-lactide, lactide racemic mixture and any combination of two or more of the aforementioned compounds and glycolide.

In principle, the present invention is not particularly limited concerning the chemical nature of the used catalyst. In particular, good results are obtained, if the catalyst is at least one organometallic compound. Good results are in particular obtained, when the catalyst is at least one organometallic compound comprising a metal selected from the group consisting of magnesium, titanium, zinc, aluminum, indium, yttrium, tin, lead, antimony, bismuth and any combination of two or more of the aforementioned metals. The at least one organometallic compound preferably comprises as organic residue a residue selected from the group consisting of alkyl groups, aryl groups, halides, oxides, alkanoates, alkoxides and any combination of two or more of the aforementioned groups.

More preferably, the catalyst is at least one organometallic compound comprising as metal aluminum and/or tin. Still more preferably, the catalyst is at least one organometallic compound being selected from the group consisting of tin octoate, tetraphenyl tin, butyltin trimethoxide, dibutyltin oxide, aluminum isopropoxide, Al(O-i-Pr)ₚ with 1≤p≤3, Et₃-pAl(O(CH₂)₂X)ₚ with 1≤p≤3, α, β, γ, δ, ε tetraphenylporphinato aluminium (TPPIAIX) and any combination of two or more of the aforementioned compounds. Particularly suitable as catalyst is tin octoate, such as tin(II) 2-ethylhexanoate.

In accordance with a further particularly preferred embodiment of the present invention, during the ring-opening-polymerization at least one initiator is present so that the step of polymerization comprises that the one or more cyclic esters is/are polymerized in the reactor system in the presence of at least one catalyst and at least one initiator.

The at least one initiator is preferably a hydroxy compound and more preferably a hydroxy compound being selected from the group consisting of monohydroxy compounds, dihydroxy compounds, trihydroxy compounds, tetrahydroxy compounds and any combination of two or more of the aforementioned compounds. By the functionality of the at least one hydroxy compound, the design of the resulting (co)polymer can be adjusted. If a monohydroxy compound is used, a linear (co)polymer will be produced, whereas branched (co)polymers may be produced by using one or more dihydroxy compounds, trihydroxy compounds and/or tetrahydroxy compounds.

Good results are in particular obtained, when the at least one initiator is selected from the group consisting of 2-ethyl hexanol, 1-decanol, C₁₀-C₂₀-monohydroxy fatty alcohols, benzyl alcohol, p-phenylbenzyl alcohol, ethylene glycol, propylene glycol, butane-1,4-diol, poly(ethylene glycol) with a weight average molecular weight of 200 to 10,000 g/mol, 2-hydroxymethyl-1,3-propane, glycerol, polyglycerol with a weight average molecular weight of 100 to 1,000 g/mol, trihydroxybenzene (phloroglucinol), trimethylolpropane and its dimer, pentaerythritol and its dimers and any combination of two or more of the aforementioned compounds.

In a further development of the idea of the present invention, it is suggested that the molar ratio of the total amount of the one or more cyclic esters to the total amount of the at least one initiator applied during the ring-opening-polymerization is 100 to 10,000. More preferably, the molar ratio of the total amount of the one or more cyclic esters to the total amount of the at least one initiator applied during the ring-opening-polymerization is 300 to 10,000, even more preferably 500 to 10,000 and most preferably 500 to 3,000.

The total amount of the at least one initiator applied during the ring-opening-polymerization may be also expressed as less than 0.1 to 50 meq or less than 0.1 to 50 mmol/kg, respectively, preferably 0.5 to 40 meq or mmol/kg, respectively, more preferably 1 to 30 meq or mmol/kg, respectively, and most preferably 10 to 20 meq or mmol/kg, respectively.

In accordance with the present invention, the reactor system may comprise one or more continuous stirred-tank reactors. Alternatively, the reactor system may comprise one or more loop reactors. Still alternatively, the reactor system may comprise at least one plug flow reactor. Still alternatively, the reactor system may comprise any possible combination of at least one continuous stirred-tank reactor and/or at least one loop reactor and/or at least one plug flow reactor. Preferably, the reactor system comprises, in series i) at the upstream end one continuous stirred-tank reactor or one loop reactor and ii) downstream thereof at least one continuous stirred-tank reactor and/or at least one loop reactor and/or at least one plug flow reactor. For instance, the reactor system comprises, in series seen from upstream to downstream i) three continuous stirred-tank reactors, ii) three loop reactors, iii) a continuous stirred-tank reactor and a plug flow section preferably with two feeding points or iv) a loop reactor and a plug flow section preferably with two feeding points. Between any of two adjacent of the aforementioned reactors, a pump may be provided.

In accordance with a further particularly preferred embodiment of the present invention, the reactor system comprises i) at the upstream end one or more continuous stirred-tank reactors and ii) downstream thereof at least one plug flow reactor. Alternatively, the reactor system may comprise i) at the upstream end one or more loop reactors and ii) downstream thereof at least one plug flow reactor. Still alternatively, the reactor system may comprise i) at the upstream end one continuous stirred-tank reactor or one loop reactor and ii) downstream thereof one or more continuous stirred-tank reactors and/or one or more loop reactors and iii) downstream thereof a plug flow reactor. This allows to have multiple feeding points within the reactor system allowing to produce (co)polymers with a specified design, composition and molecular weight. Furthermore, it allows to easily change one or more feeding points in the reaction plant so that the process is easily modified from the production of a certain (co)polymer with a certain molecular weight and structure, such as a linear copolymer of lactic acid and caprolactone, to another (co)polymer of the same type, such as to a branched copolymer of lactic acid and caprolactone. Between any of two adjacent of the aforementioned reactors, a pump may be provided.

Preferably, the reactor system comprises one or two continuous stirred-tank reactors and downstream thereof a plug flow reactor section, which may comprise one or two feeding points. Alternatively, the reactor system preferably comprises one or two loop reactors and downstream thereof a plug flow reactor section, which may comprise one or two feeding points. For example, the reactor system comprises one loop reactor and downstream thereof a plug flow reactor section, which comprises two feeding points. For instance, the reactor system comprises one continuous stirred-tank reactor and downstream thereof a plug flow reactor section, which comprises two feeding points. Between any of two adjacent of the aforementioned reactors, a pump may be provided.

In accordance with the present invention, the reactor system comprises at least one mixer and/or at least one heat transfer element, i.e. preferably at least one of the at least one continuous stirred-tank reactor, at least one loop reactor or at least one plug flow reactor of the reactor system comprises at least one mixer and/or at least one heat transfer element. The mixer may be a static mixer, a dynamic mixer or a combination of both.

If the reactor system comprises more than one reactor, preferably at least 50%, more preferably at least 75% and most preferably all of the reactors of the reactor system comprises at least one mixer and/or at least one heat transfer element and more preferably at least one mixer as well as at least one heat transfer element. More preferably, any of the continuous stirred-tank reactors, if present, comprises a dynamic mixer and preferably also a heat transfer element, wherein any of the loop reactors, if present, and any of the plug flow reactors, if present, comprises at least one static mixer, and more preferably also at least one heat transfer element. The mixer(s) and heat transfer element(s) may be combined, namely so that the static mixer is made of hollow pipes, which are formed so that the reaction mixture is mixed, when it passes through the area formed between the hollow pipes. By pumping heat transfer medium through the hollow pipes, they also function as heat transfer elements. Thus, it is particularly preferred that the reactor system comprises, in series i) at the upstream end one continuous stirred-tank reactor comprising at least one dynamic mixer and/or a heat transfer element or one loop reactor comprising at least one static mixer and/or a heat transfer element and ii) downstream thereof at least one continuous stirred-tank reactor comprising at least one dynamic mixer and/or a heat transfer element and/or at least one loop reactor comprising at least one static mixer and/or a heat transfer element and/or at least one plug flow reactor comprising at least one static mixer and/or a heat transfer element. Most preferably, the reactor system comprises, in series seen from upstream to downstream i) three continuous stirred-tank reactors each comprising at least one dynamic mixer and optionally also a heat transfer element, ii) three loop reactors each comprising at least one static mixer and optionally also a heat transfer element, iii) a continuous stirred-tank reactor comprising at least one dynamic mixer and optionally also a heat transfer element and a plug flow section preferably with two feeding points comprising at least one static mixer and optionally also a heat transfer element or iv) a loop reactor and a plug flow section preferably with two feeding points each comprising at least one static mixer and optionally also a heat transfer element. Between any of two adjacent of the aforementioned reactors, a pump may be provided.

As set out above, the mixer used in a continuous stirred-tank reactor is preferably a dynamic mixer, i.e. a mixer comprising moving and in particular rotating parts. The dynamic mixer may be a dynamic mixer of the impeller-type, such as preferably a dynamic mixer comprising one or more paddle-type impellers, one or more anchor type-impellers, one or more gate-type impellers and/or one or more helical-type impellers.

As further set out above, the mixer used in a loop reactor or in a plug flow reactor is preferably a static mixer, i.e. a mixer not comprising moving and in particular rotating parts. Static mixers usually produce a mixing effect by generating a turbulent flow due to static, i.e. non-moving elements, such as plates, bars, crossbars, baffles, helically formed deflection means, grids and the like. Suitable examples for static mixers, are x-type static mixers, spiral/helical-type static mixers, quattro-type static mixers, baffle plate-type static mixers, turbulator strips-type static mixers and any combination of two or more of the abovementioned mixer types. X-type static mixers comprise deflection means in the form of bars, crossbars, plates or the like having in a plan view and/or side view and/or cross-sectional view a x-like form. Such x-type static mixers are described for instance in WO 2010/066457 A1, EP 1 206 962 A1, EP 2 158 027 B1 and EP 0 655 275 B1 and are commercially available from Sulzer Chemtech Ltd, Winterthur, Switzerland under the tradenames SMX, SMXL and SMX plus as well as from Fluitec, Neftenbach, Switzerland under the tradename CSE-X. Spiral/helical-type static mixers have a helically formed deflection means and are described for instance in US 3,743,250 A, whereas quattro-type static mixers comprise deflection means forming chamber-like mixing sections and are described for instance in EP 2 548 634 B1 and in EP 0 815 929 B1. While baffle plate-type static mixers comprise usually longitudinal deflection means and are described for instance in EP 1 510 247 B1 and in US 4,093,188 A, turbulator strip-type static mixers comprise in a tube a plurality of elongated strips, each of which being formed by a series of alternating deflection panels successively joined together by for example substantially triangular bridging portions with the strips being held together and anchored substantially on the axis of the tube by alternate ones of the bridging portions and the other bridging sections being disposed adjacent the inner wall of the tube and are described for instance in US 4,296,779 A. Other suitable static mixers are distributed from Sulzer Chemtech AG under the tradenames CompaX, SMI, KVM, SMV and GVM and from Stamixco AG, Wollerau, Switzerland under the tradename GVM.

In a further development of the idea of the present invention it is suggested to use as heat transfer element a tube bundle heat exchanger. Preferably, the tube bundles of the heat transfer element are formed so that they simultaneously function as static mixing element. Such heat transfer elements, which are also static mixers, are for instance described in EP 1 967 806 B1 and in EP 2 052 199 B1 and are commercially available form Sulzer Chemtech AG under the tradename SMR and from Fluitec under the tradename CSE-XR. For example, such a combined heat transfer element and static mixer comprises a housing disposed on a longitudinal axis and a plurality of installations in the housing, each the installation including at least a first hollow structure and at least a second hollow structure for the passage of a first fluid therethrough and the passage of a second fluid thereover, the first hollow structure and the second hollow structure being arranged crosswise with respect to one another, each the hollow structure having a flow cross-section with a first width B1 and a second width B2 perpendicular to the first width B1, with the ratio B1/B2 being larger than one and B1 being oriented normally to a plane contains the longitudinal axis of the housing. Moreover, such a combined heat transfer element and static mixer may comprise fittings being arranged in a casing of extending longitudinally between a head end and a base end so that the fittings form a heat-transferring and mixing structure, whereby the fittings comprise tubes so that the heat-transferring medium is transportable as inner stream inside the tubes of the fittings from the base end to the head end and the liquid is transportable as outer stream outside the tubes from the head end to the base end, whereby the tubes of the fittings preferably form plane layers arranged in parallel, in which one respective tube extend from one entry end to an outlet end in a serpentine configuration comprising arcs and parallel partial tubular pieces. Reinforcement elements may be provided, which stabilize the tubes of the fittings in longitudinal direction against the pressure gradients generated by the liquid, whereby the reinforcement elements connect the parallel partial tubular pieces in a main area to form a non-extensible partial structure, and whereby the fittings remain partially unreinforced in an auxiliary area as a longitudinally extensible partial structure that complements the main area.

In a further development of the idea of the present invention, it is proposed that the residence time - or reaction time, respectively - in the reactor system is adjusted to be 0.1 to 5.0 hours, more preferably 0.2 to 4.0 hours, yet more preferably 0.3 to 3.0 hours, still more preferably 0.4 to 2.0 hours and most preferably 0.5 to 1.5 hours. The residence time - or reaction time, respectively - may be adjusted, among others, by appropriately selecting the volume of the continuous stirred-tank reactors, the length of the loop reactors and the plug flow reactors and the flow rate of the components of the reaction mixture. Alternatively, for reactions requiring a very short residence time in the reactor system, the option to bypass one of the sections of the plug flow reactors may be used to enable a flexible operation with the same reactor system. In contrast, for reactions requiring a very long residence time in the reactor system, the processing fluid from one of the plug flow reactors may be recycled back to the aforementioned continuous stirred-tank reactor or loop reactor. These options can be realized by having valves before each reactor section to direct the fluid flow.

As set out above, the process in accordance with the present invention is particularly suitable to be operated so that the one or more cyclic esters are polymerized in the reactor system in the presence of the at least one catalyst and the optional at least initiator by ring-opening-polymerization to a branched poly(hydroxy acid) homo- or copolymer. Particularly, the process may be operated so that a random copolymer or a block copolymer or a combination thereof is produced. As a particular advantage, the branched poly(hydroxy acid) homo- or copolymers prepared with the method in accordance with the present invention may be used as foamable (co)polymer.

Alternatively, the process may be operated so that the one or more cyclic esters are polymerized in the reactor system in the presence of at least one catalyst and optional at least initiator by ring-opening-polymerization to a linear poly(hydroxy acid) homo- or copolymer.

According to a first preferred variant of the present invention, all of the one or more cyclic esters is added (together with the catalyst and the optional initiator) to the reactor system upstream of the most upstream of the reactors, if several reactors are used, or upstream of the one reactor, if only one reactor is used, respectively. Preferably, all of the two cyclic esters (such as i) lactide and ii) glycolide or caprolactone) is added (together with the catalyst and the optional initiator) to the reactor system upstream of the most upstream reactor. Thereby, a block copolymer comprising an inner first block of one of the two cyclic esters (such as polylactide block) and an outer second block of the other of the two cyclic esters (such as polycaprolactone block or as polyglycolide block) is produced, since the reactivity of one of the two cyclic esters (such as of the lactide) is higher than that of the other of the two cyclic esters (such as of the caprolactone or of the glycolide) so that firstly the lactide polymerizes, before the caprolactone or glycolide polymerizes. The relative lengths of the single blocks are adjusted by the molar ratio of added lactide to the added caprolactone. By selecting an appropriate initiator, branched copolymers may be obtained.

In accordance with a second preferred variant of the present invention, a first part of the one or more cyclic esters is added (together with catalyst and optional initiator) to the reactor system upstream of the most upstream of the reactors, if several reactors are used, or upstream of the one reactor, if only one reactor is used, respectively, wherein the rest of the one or more cyclic esters is added (together with catalyst and optional initiator) to the reactor system downstream thereof, i.e. into a reactor being downstream of the most upstream of the reactors, if several reactors are used, or into the one reactor at a location downstream of the location, where the first part of the one or more cyclic esters is added, if only one reactor is used. In case of a reactor system comprising i) at the upstream end one continuous stirred-tank reactor and/or one loop reactor and ii) downstream thereof at least one continuous stirred-tank reactor and/or at least one loop reactor and/or at least one plug flow reactor, the rest of the one or more cyclic esters is added (together with catalyst and optional initiator) to the reactor system preferably downstream of the most upstream reactor (i) and upstream of the next downstream reactor (ii). For instance, the reactor system comprises an upstream continuous stirred-tank reactor and downstream thereof a plug flow reactor. In this case, the first part of the one or more cyclic esters is added (together with catalyst and optional initiator) to the reactor system upstream of the continuous stirred-tank reactor and the rest of the one or more cyclic esters is added (together with catalyst and optional initiator) to the reactor system upstream of the plug flow reactor.

It is preferred in the aforementioned embodiment that the first part of the one or more cyclic esters is a mixture of two different monomers (such as of i) lactide and ii) caprolactone or glycolide) with a first molar ratio of the two different monomers, wherein the rest of the one or more cyclic esters is a mixture of the same two different monomers (such as of i) lactide and ii) caprolactone or glycolide) as the first part, but with a second molar ratio of the two different monomers, which is different from the first molar ratio. In this case a copolymer comprising i) two different polylactide blocks and ii) two different polycaprolactone blocks or two different polyglycolide blocks is obtained.

In accordance with a third preferred variant of the present invention, a first part of the one or more cyclic esters is added to the reactor system upstream of the most upstream of the reactors, if several reactors are used, or upstream of the one reactor, if only one reactor is used, respectively, wherein a second part of the one or more cyclic esters is added to the reactor system into a reactor being downstream of the most upstream of the reactors but upstream of the most downstream of the reactors, if at least three reactors are used, or into the first or second reactor at a location downstream of the location, where the first part of the one or more cyclic esters is added but upstream of the most downstream part of the reactor system, if only one or two reactors are used, and wherein the rest of the one or more cyclic esters is added to the reactor system into a reactor being downstream of the reactor, into which the second part of the one or more cyclic esters is added, if at least three reactors are used, or into the one or two reactors at a location downstream of the location, where the second part of the one or more cyclic esters is added, if only one or two reactor are used. In case of a reactor system comprising i) at the upstream end one continuous stirred-tank reactor or one loop reactor and ii) downstream a plug flow section with two feeding points, the first part of the one or more cyclic esters is added to the reactor system upstream of the continuous stirred-tank reactor or one loop reactor, wherein the second part of the one or more cyclic esters is added to the reactor system downstream of the continuous stirred-tank reactor or one loop reactor but upstream of the plug flow section at the first feeding point, and wherein the rest of the one or more cyclic esters is added to the reactor system into the plug flow section at the second feeding point, which is located downstream of the first feeding point.

It is preferred in the aforementioned embodiment that the first part of the one or more cyclic esters is a mixture of two different monomers (such as of i) lactide and ii) caprolactone or glycolide) with a first molar ratio of the two different monomers, wherein the second part of the one or more cyclic esters is a mixture of the same two different monomers (such as of i) lactide and ii) caprolactone or glycolide) as the first part, but with a second molar ratio of the two different monomers, which is different from the first molar ratio, and wherein the rest of the one or more cyclic esters is a mixture of the same two different monomers (such as of i) lactide and ii) caprolactone or glycolide) as the first part and the second part, but with a third molar ratio of the two different monomers, which is different from the first molar ratio and different from the second molar ratio. In this case a copolymer comprising i) three different polylactide blocks and ii) three different polycaprolactone blocks or three different polyglycolide blocks is obtained.

Alternatively, in the third variant the first part of the one or more cyclic esters may be a mixture of two different monomers (such as of i) lactide and ii) caprolactone or glycolide) with a first molar ratio of the two different monomers, wherein the second part of the one or more cyclic esters is a mixture of the same two different monomers (such as of i) lactide and ii) caprolactone or glycolide) as the first part, but with a second molar ratio of the two different monomers, which is different from the first molar ratio, and wherein the rest of the one or more cyclic esters is only one of the two different monomers (such as of lactide, caprolactone or glycolide). Thereby, a copolymer with defined terminal blocks made of the monomer added most downstream of the reactor system is obtained.

As set out above, it is a particular advantage of the present invention that the process can easily transit from the production of a certain (co)polymer with a certain molecular weight and structure, such as a linear copolymer of lactic acid and caprolactone or a linear copolymer of lactic acid and glycolic acid, to another (co)polymer of the same type, such as to a branched copolymer of i) lactic acid and ii) caprolactone or glycolic acid. This is in particular shown by the aforementioned variants, which may be easily combined together using the same reactor system. For instance, a reactor system comprising an upstream continuous stirred-tank reactor and downstream thereof a plug flow section with two feeding points may firstly be operated by only adding lactide and caprolactone (or glycolide) as comonomers into a mixture further comprising catalyst and initiator to the reactor system at the upstream end of the continuous stirred-tank reactor so as to produce a block copolymer comprising an inner polylactide block and an outer polycaprolactone block. Therein, the two feeding points are not utilized. After termination of the process, the same reactor system may easily be changed so that a first mixture of lactide, caprolactone, catalyst and initiator with a first molar ratio of lactide and caprolactone (or glycolide) is added at the upstream end of the continuous stirred-tank reactor, and that a second mixture of lactide, caprolactone (or glycolide), catalyst and initiator with a second molar ratio of lactide and caprolactone (or glycolide) is added at a first feeding point at the upstream end of the plug flow section and that a third mixture of lactide, caprolactone (or glycolide), catalyst and initiator with a third molar ratio of lactide and caprolactone (or glycolide) is added within the plug flow section at a second feeding point being downstream of the first feeding point. In this case a copolymer comprising i) three different polylactide blocks and ii) three different polycaprolactone blocks (or three different polyglycolic acid blocks) is obtained. The process may then be changed so that in a variation of the aforementioned embodiment, at the second feeding point within the plug flow section instead of a third mixture of lactide, caprolactone (or glycolide), catalyst and initiator only a mixture comprising either i) lactide or ii) caprolactone (or glycolide) together with optionally catalyst and/or initiator may be added at the second feeding point within the plug flow section so as to obtain a copolymer with defined terminal blocks made of the monomer added most downstream of the reactor system.

In a further development of the idea of the present invention it is suggested that the process is operated so that the overall conversion of the one or more cyclic esters to the poly(hydroxy acid) homo- or copolymer during the ring-opening-polymerization is at least 85.0%, preferably at least 90.0%, more preferably at least 95.0%, still more preferably at least 97.0%, yet more preferably at least 99.0% and most preferably more than 99.0 to 99.5%.

The change in conversion of monomers with time may be followed according to the present invention by gas chromatography (GC) for instance with the following procedure. Approximately 100 mg of sample are weighed, dissolved in 10 mL of DCM containing 30 mg of 1-octanol as internal standard. 1 ml of this solution is precipitated in 10 ml of 95:5 (v/v) hexane/acetone mixture. Afterwards, 1.5 ml of the mixed suspension was filtered through a 0.45 µm polytetrafluoroethylene (PTFE) filter for measurement. For polymers produced using glycolide as one of the monomers, 100 mg of sample are weighed, dissolved in 20 ml of tetrahydrofuran (THF) containing 30 mg of 1-octanol as internal standard. 2 ml of this solution is precipitated in 10 ml of methanol. Afterwards, 1.5 ml of the mixed suspension is filtered through a 0.45 µm polytetrafluoroethylene (PTFE) filter for measurement. Measurements are performed using a GC Clarus 580 (from Perkin Elmer, UK) equipped with an auto-sampler, an injector channel, an oven and a flame ionization detector (FID). The GC column is J&W DB-17MS (Agilent). The carrier gas is Helium (99.999%, 1 ml/min of flow), while the fuel gases are purified air after filter (Drypoint M from BEKO Technologies, Germany, flow of 450 ml/min) and hydrogen (from water electrolysis, 45 ml/min flow). The injector temperature is fixed at 180°C, while the detector is set to 350 °C.

Preferably, the poly(hydroxy acid) homo- or copolymer produced during the ring-opening-polymerization has a weight average molecular weight of at least 10,000 g/mol, preferably of at least 20,000 g/mol, more preferably of at least 40,000 g/mol and yet more preferably at least 60,000 g/mol. The upper limit for the weight average molecular weight of the poly(hydroxy acid) homo- or copolymer produced during the ring-opening-polymerization is preferably 120,000 g/mol, but may be also 100,000 g/mol or 80,000 g/mol.

According to another embodiment of the present patent application, it is preferred that the poly(hydroxy acid) homo- or copolymer produced during the ring-opening-polymerization has a number average molecular weight of at least 5,000 g/mol, preferably of at least 15,000 g/mol, more preferably of at least 25,000 g/mol, yet more preferably at least 35,000 g/mol and most preferably at least 45,000 g/mol. The upper limit for the number average molecular weight of the poly(hydroxy acid) homo- or copolymer produced during the ring-opening-polymerization is preferably 110,000 g/mol, but may be also 90,000 g/mol or 80,000 g/mol. Suitable ranges for the number average molecular weight of the poly(hydroxy acid) homo- or copolymer produced during the ring-opening-polymerization may be for instance 10,000 to 20,000 g/mol, 20,000 to 30,000 g/mol, 30,000 to 50,000 g/mol or 50,000 to 80,000 g/mol.

In accordance with the present invention, the number- and weight-average molecular weight (Mₙ and M_{w}) of polymers is determined by gel permeation chromatography using a poly(methyl methacrylate) standard and a sample concentration of 1 to 5 mg/ml in 1ml HFIP depending on the sample's molecular weight, wherein the column temperature is 40 °C, the temperature of the RI-Detector (refractive index) is 40 °C and the flow rate 1 ml/min. As instrument, (GPC Viscotek TDA max from Malvern Panalytical, UK equipped with a Viscotek VE 2001 solvent/sample module, a precolumn HFIP guard (50 mm length and 8 mm internal diameter), two columns (Viscotek HFIP6000M and HFIP3000, Viscotek, Switzerland; 300 mm length and 8 mm internal diameter), and a triple detector Viscotek TDA 305 (RI, UV and viscosimeter) may be used. The calibration curve may be constructed using poly(methylmethacrylate) (PMMA) standard (Mn,max = 50,352 g/mol and Ð of 1.023).

The polydispersity index, i.e. the ratio of Mw/Mn, of the poly(hydroxy acid) homo- or copolymer produced during the ring-opening-polymerization may be preferably 1 to 3, more preferably 1 to 2 and most preferably 1 to 1.5.

In a further development of the idea of the present invention it is suggested that the poly(hydroxy acid) homo- or copolymer produced during the ring-opening-polymerization has a yellowness index below 40, preferably below 30, more preferably below 15, even preferably below 10, yet more preferably below 5 and most preferably less than 3. The yellowness index is measured in accordance with the present invention in accordance with ASTM E313.

It is preferred that after the polymerization ring-opening-polymerization the non-reacted lactide remaining in the polymerization product is removed to a final concentration of preferably less than at least 0.5 % by weight, in order to obtain a product of marketable quality. Such a removal of unreacted lactide may be achieved by means of at least one devolatilization step conducted at elevated temperature e.g. between 190 and 230°C and at a reduced pressure of e.g. below 5 mbar(absolute). For example, a two-stage devolatilization process may be performed in order to obtain the required degree of lactide removal and thus to obtain a polymer having the required quality. In order to stop the polymerization reaction, an inhibitor is preferably added to the polymer product at the end of the polymerization and before or after the first devolatilization step. In order to maximize the yield of polymer product per amount of lactide feed, it is further preferred that the unreacted lactide is recovered after the devolatilization e.g. by condensation, then optionally the condensed product is purified and thereafter the condensed product is recycled into the polymerization reaction. In particular, the addition of one or more efficient inhibitor additives at the end of the polymerization reaction is preferred for an efficient devolatilization. Before the first devolatilization step, between the first and second devolatilization step or after the second devolatilization step additives and/or other polymers may be mixed and/or blended in one or more units for mixing and/or blending additives into the product stream in order to improve the mechanical, rheological and/or thermal properties of the final polymer product.

Moreover, the final polymer product stream may be cooled in a cooler and then pressed through a granulator or pelletizer, respectively, or through another forming unit.

Subsequently, the present invention is described by means of illustrative, but not limiting figures, in which:
- Fig. 1a to f: show six specific reactor systems suitable for performing the method in accordance with the present invention.
- Fig. 2: shows general possible reactor combinations for suitable reactor systems being suitable for performing the method in accordance with the present invention.
- Fig. 3a to d: show four different types of dynamic mixers useable in the method in accordance with the present invention.
- Fig. 4a to e: show four different types of static mixers one of which being also a heat transfer element useable in the method in accordance with the present invention.

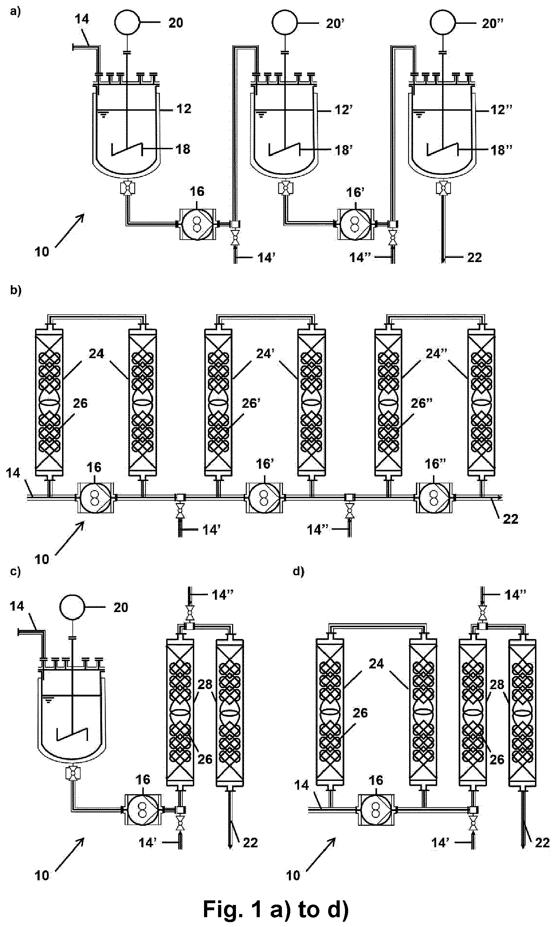

Fig. 1a shows a reactor system 10 suitable for performing the method in accordance with the present invention according to a first embodiment, which comprises in series three continuous stirred-tank reactors 12, 12', 12". Three feeding points 14, 14', 14" for adding monomer, catalyst and initiator are provided upstream of the most upstream continuous stirred-tank reactors 12, between the first and second continuous stirred-tank reactors 12, 12' and between the second and most downstream continuous stirred-tank reactors 12', 12". Between each two of the continuous stirred-tank reactors 12, 12' and 12', 12" a pump 16, 16' is provided. Each of the continuous stirred-tank reactors 12, 12', 12" comprises an agitated, i.e. dynamic mixer 18, 18', 18", each of which is driven by a motor 20, 20', 20". The product stream is withdrawn from the most downstream continuous stirred-tank reactors 12" via line 22.

Fig. 1b shows a reactor system 10 being similar to that of Fig. 1a, except that the continuous stirred-tank reactors 12, 12', 12" are replaced by three loop reactors 24, 24', 24", each of which comprising two static mixers embodied also as heat transfer element 26, 26', 26" and each of which comprising a pump 16, 16', 16".

Fig. 1c shows a reactor system 10 comprising a continuous stirred-tank reactor 12 and downstream thereof two plug flow reactors 28, 28', each of which comprising two static mixers embodied also as heat transfer element 26, whereas Fig. 1d shows a reactor system 10 comprising a loop reactor 24 and downstream thereof two plug flow reactors 28 and 28', each of which comprising two static mixers embodied also as heat transfer element 26', 26".

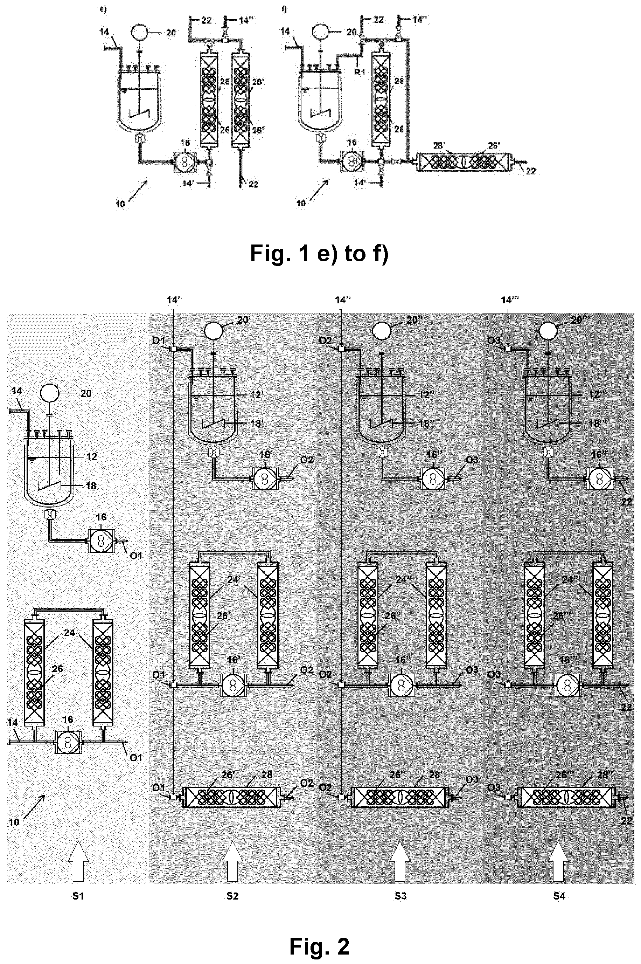

Fig. 1e shows a reactor system 10 being similar to that of Fig. 1c, except that an additional valve is located after the first plug flow reactor 28 to enable the bypassing of the second plug flow reactor 28'.

Fig. 1f shows a reactor system 10 being similar to that of Fig. 1e, except that an additionally valve is located between the outlet of the first plug flow reactor 28 and the continuous stirred tank reactor 12 to enable a recycling R1 and that an additional valve is located between the pump 16 and the second plug flow reactor 28' to guide the flow direction.

Fig. 2 shows general possible reactor combinations for reactor systems being suitable for performing the method in accordance with the present invention. From left to right, four segments S1, S2, S3, S4 are shown, wherein the left segment S1 shows (from top to bottom) two alternative reactors and any of segments 2 to 4 show (from top to bottom) three alternative reactors. Any or the reactors shown in segment S1 may be used as most upstream reactor of the reactor system 10, i.e. either the continuous stirred-tank reactor 12 or the loop reactor 24. The most upstream reactor 12, 24 is connected via its outlet O1 with any one of the reactors shown in segment S2, i.e. either with the continuous stirred-tank reactor 12', with the loop reactor 24' or with the plug flow reactor 28. In turn, the reactor of segment S2 is connected via its outlet O2 with any one of the reactors shown in segment S3, i.e. either with the continuous stirred-tank reactor 12", with the loop reactor 24" or with the plug flow reactor 28'. Finally, the most reactor of segment S3 is connected via its outlet O3 with any one of the reactors shown in segment S4, i.e. either with the continuous stirred-tank reactor 12"', with the loop reactor 24'" or with the plug flow reactor 28". Between any of segments S2 and S3 as well as S3 and S4 one or more other reactors selected from the group consisting of continuous stirred-tank reactors, of loop reactors and of plug flow reactors may be added. At the outlet of segments S2, S3, a valve is added to enable the continuous passage to the next segment, i.e., O2, O3, or a bypass as final outlet 22.

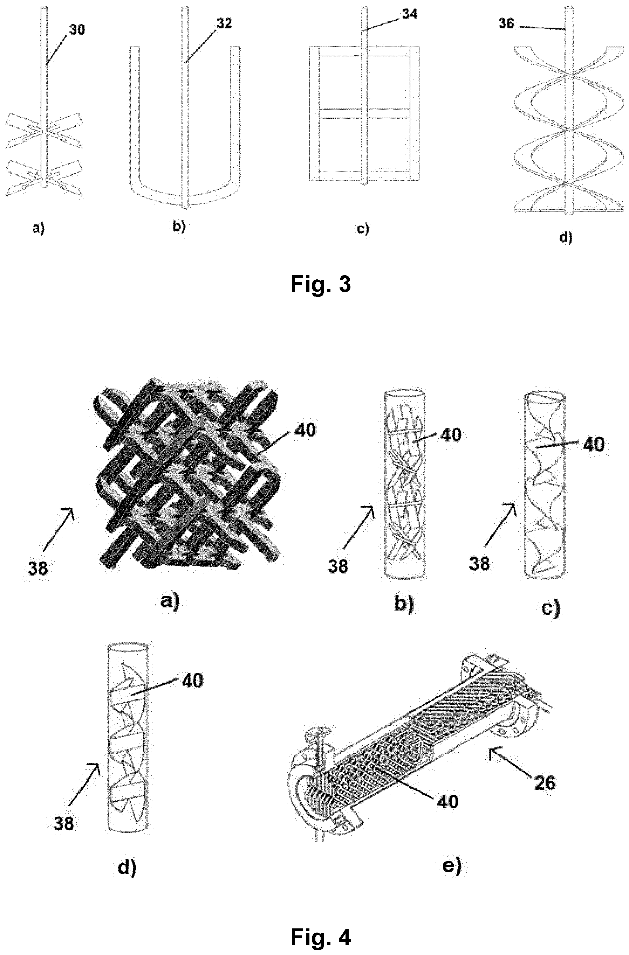

Fig. 3 shows four different types of dynamic mixers useable in the method in accordance with the present invention, namely in Fig. 3a a dynamic mixer with a paddle-type impeller 30, in Fig. 3b a dynamic mixer with an anchor-type impeller 32, in Fig. 3c a dynamic mixer with a gate-type impeller 34 and in Fig. 3d a dynamic mixer with a helical-type impeller 36.

Fig. 4 shows five different types of static mixers useable in the method in accordance with the present invention, namely in Fig. 4a a static mixer 38 of the x-type comprising deflection means 40 in the form of crossbars having in a plan view as well as in side view a x-like form. Fig. 4b shows a static mixer 38 of the baffle plate-type comprising longitudinal deflection means 40, whereas Fig. 4c and 4d show static mixers 38 with curved deflection means 40. Fig. 4e shows a combined static mixer and heat transfer element 26 with tube-like deflection means 40 being formed so that they function as heat transfer element by transporting heat transfer medium within the tubes and simultaneously as static mixer for liquid being transported outside of the tube-like deflection means 40, such as it is commercially distributed by Sulzer Chemtech Ltd under the tradename SMR.

### Reference numerals

- 10: Reactor system
- 12, 12', 12", 12'": Continuous stirred-tank reactor
- 14, 14', 14", 14'": Feeding point
- 16, 16', 16", 16'": Melt pump
- 18, 18', 18", 18'": Dynamic mixer
- 20, 20', 20", 20'": Motor
- 22: Product removal line
- 24, 24', 24", 24'": Loop reactor
- 26, 26', 26", 26'": Static mixer and heat transfer elements
- 28, 28', 28": Plug flow reactor
- 30: Dynamic mixer with a paddle-type impeller
- 32: Dynamic mixer with an anchor-type impeller
- 34: Dynamic mixer with a gate-type impeller
- 36: Dynamic mixer with a helical-type impeller
- 38: Static mixer
- 40: Deflection means

- O1, O2, O3: Outlet 1, outlet 2, outlet 3
- R1: Recycling
- S1, S2, S3, S4: First, second, third and fourth segment

## Claims

1. A process of continuously manufacturing a poly(hydroxy acid) homo- or copolymer comprising the step of polymerizing as at least one monomer, one or more cyclic esters of hydroxy acid in the presence of at least one catalyst in a reactor system (10) by ring-opening-polymerization to the poly(hydroxy acid) homo- or copolymer, wherein the molar ratio of the total amount of the one or more cyclic esters to the total amount of the at least one catalyst applied during the ring-opening-polymerization is more than 10,000, wherein the reactor system (10) comprises at least one of a continuous stirred-tank reactor (12, 12', 12", 12"'), of a loop reactor (24, 24', 24", 24'") and of a plug flow reactor (28, 28', 28"), and wherein at least one of these reactors of the reactor system (10) comprises at least one mixer and/or at least one heat transfer element.

2. The process in accordance with claim 1, wherein the molar ratio of the total amount of the one or more cyclic esters to the total amount of the at least one catalyst applied during the ring-opening-polymerization is at least 11,000, preferably at least 12,000, more preferably at least 15,000, still more preferably at least 20,000, yet more preferably at least 25,000 and most preferably at least 27,000.

3. The process in accordance with claim 1 or 2, wherein the ring-opening-polymerization is carried out at a temperature of at least 160°C, preferably at a temperature of 160°C to 220°C, more preferably at a temperature of 170°C to 215°C, yet more preferably at a temperature of 175°C to 210°C and most preferably at a temperature of 180°C to 200°C.

4. The process in accordance with any of the preceding claims, wherein the content of the at least one catalyst applied during the ring-opening-polymerization based on the reaction mixture is between more than 0 ppm and 200 ppm or less, preferably between 1 ppm and 180 ppm, more preferably between 10 ppm and 150 ppm, still more preferably between 10 ppm and 100 ppm and most preferably between 50 ppm and 100 ppm.

5. The process in accordance with any of the preceding claims, wherein the at least one cyclic ester is selected from the group consisting of lactide, glycolide, caprolactone, valerolactone, decanolactone, butyrolactone, dodecalactone, octanolactone and any combination of two or more of the aforementioned compounds or is preferably selected from the group consisting of L-lactide, D-lactide, meso-lactide, lactide racemic mixture, glycolide, ε-caprolactone, γ-caprolactone, δ-valerolactone, γ-valerolactone, 5-decanolactone, δ-decanolactone, δ-butyrolactone, δ-dodecalactone, 5-dodecalactone, δ-octanolactone and any combination of two or more of the aforementioned compounds, wherein preferably during the ring-opening-polymerization i) a lactide is polymerized so as to manufacture a polylactide or ii) a caprolactone is polymerized so as to manufacture a polycaprolactone or iii) a glycolide is polymerized so as to manufacture a polyglycolide or iv) a lactide and a caprolactone are polymerized so as to manufacture a poly(lactide-co-caprolactone) or v) a lactide and a glycolide are polymerized so as to manufacture a poly(lactide-co-glycolide).

6. The process in accordance with any of the preceding claims, wherein the catalyst is at least one organometallic compound comprising as metal aluminum or tin, wherein preferably the catalyst is at least one organometallic compound selected from the group consisting of tin octoate, tetraphenyl tin, butyltin trimethoxide, dibutylin oxide, aluminum isopropoxide, Al(O-i-Pr)ₚ with 1≤p≤3, Et₃-pAl(O(CH₂)₂X)ₚ with 1≤p≤3, α, β, γ, δ, ε tetraphenylporphinato aluminium (TPPIAIX) and any combination of two or more of the aforementioned compounds.

7. The process in accordance with any of the preceding claims, wherein during the ring-opening-polymerization at least one initiator is present so that the step of polymerizing comprises that the one or more cyclic esters is/are polymerized in the reactor system (10) in the presence of the at least one catalyst and the at least one initiator, wherein the at least one initiator is selected from the group consisting of monohydroxy compounds, dihydroxy compounds, trihydroxy compounds, tetrahydroxy compounds and any combination of two or more of the aforementioned compounds and preferably the at least one initiator is selected from the group consisting 2-ethyl hexanol, C₁₀-C₂₀-monohydroxy fatty alcohols, benzyl alcohol, p-phenylbenzyl alcohol, ethylene glycol, propylene glycol, butane-1,4-diol, polyethylene glycol with a weight average molecular weight of 200 to 10,000 g/mol, 2-hydroxymethyl-1,3-propane, glycerol, polyglycerol with a weight average molecular weight of 100 to 1,000 g/mol, trihydroxybenzene, trimethylolpropane and its dimers, pentaerythritol and their dimers and any combination of two or more of the aforementioned compounds.

8. The process in accordance with claim 7, wherein the molar ratio of the total amount of the one or more cyclic esters to the total amount of the at least one initiator applied during the ring-opening-polymerization is 100 to 10,000, preferably 300 to 10,000, more preferably 500 to 10,000 and most preferably 500 to 3,000.

9. The process in accordance with any of the preceding claims, wherein the reactor system (10) comprises, in series seen from upstream to downstream any of:
a) at the upstream end i) one continuous stirred-tank reactor (12, 12', 12", 12"') or one loop reactor (24, 24', 24", 24'") and ii) downstream thereof at least one continuous stirred-tank reactor (12, 12', 12", 12'") and/or at least one loop reactor (24, 24', 24", 24'") and/or at least one plug flow reactor (28, 28', 28"),
b) three continuous stirred-tank reactors (12, 12', 12", 12'"),
c) three loop reactors (24, 24', 24", 24'"),
d) a continuous stirred-tank reactor (12, 12', 12", 12'") and a plug flow section (28, 28', 28") preferably with two feeding points (14, 14', 14", 14"'),
e) a loop reactor (24, 24', 24", 24'") and a plug flow section (28, 28', 28") preferably with two feeding points (14, 14', 14", 14"'),
wherein between any of two adjacent of the aforementioned reactors, a melt pump (16, 16', 16", 16'") may be provided and/or wherein between any of two adjacent of the aforementioned reactors a valve may be provided to enable the bypassing of the plug flow section.

10. The process in accordance with any of the preceding claims, wherein at least one and preferably at least 50%, more preferably at least 75% and most preferably all of the reactors in the reactor system (10) comprise at least one of a static mixer (38), of a dynamic mixer (18, 18', 18", 18'") or a combination of a static mixer and a heat transfer element (26, 26', 26", 26'").

11. The process in accordance with any of the preceding claims, wherein at least one of these reactors of the reactor system (10) comprises at least one:
i) at least one dynamic mixer (18, 18', 18", 18"') of the impeller-type, preferably a dynamic mixer (18, 18', 18", 18'") comprising one or more paddle-type impellers, one or more anchor type-impellers, one or more gate-type impellers and/or one or more helical-type impellers,
ii) at least one static mixer (38), preferably of x-type static mixers, spiral/helical-type static mixers, quattro-type static mixers, baffle plate-type static mixers, turbulator strips-type static mixers and any combination of two or more of the abovementioned mixer types, and
iii) a combined static mixer and heat transfer element 26, 26', 26", 26"', preferably a tube bundle heat exchanger.

12. The process in accordance with any of the preceding claims, wherein the reaction time in the reactor system (10) is 0.1 to 5.0 hours, preferably 0.2 to 4.0 hours, more preferably 0.3 to 3.0 hours, still more preferably 0.4 to 2.0 hours and most preferably 0.5 to 1.5 hours.

13. The process in accordance with any of the preceding claims, wherein a first part of the one or more cyclic esters is added to the reactor system (10) upstream of the most upstream reactor, and wherein the rest of the one or more cyclic esters is added to the reactor downstream thereof, wherein the first part of the one or more cyclic esters is a mixture of two different monomers with a first molar ratio of the two different monomers, and wherein the rest of the one or more cyclic esters is a mixture of the same two different monomers as the first part, but with a second molar ratio of the two different monomers, which is different from the first molar ratio.

14. The process in accordance with any of claims 1 to 12, wherein a first part of the one or more cyclic esters is added to the reactor system (10) upstream of the most upstream reactor, wherein a second part of the one or more cyclic esters is added to the reactor system (10) into a reactor being downstream of the most upstream of the reactors but upstream of the most downstream of the reactors, if at least three reactors are used, or into the first or second reactor at a location downstream of the location, where the first part of the one or more cyclic esters is added but upstream of the most downstream part of the reactor system (10), if only one or two reactors are used, and wherein the rest of the one or more cyclic esters is added to the reactor system (10) into a reactor being downstream of the reactor, into which the second part of the one or more cyclic esters is added, if at least three reactors are used, or into the one or two reactors at a location downstream of the location, where the second part of the one or more cyclic esters is added, if only one or two reactor are used, wherein the first part of the one or more cyclic esters is a mixture of two different monomers with a first molar ratio of the two different monomers, wherein the second part of the one or more cyclic esters is a mixture of the same two different monomers as the first part, but with a second molar ratio of the two different monomers, which is different from the first molar ratio, and wherein the rest of the one or more cyclic esters is i) a mixture of the same two different monomers as the first part and the second part, but with a third molar ratio of the two different monomers, which is different from the first molar ratio and different from the second molar ratio, or ii) is only one of the two different monomers.

15. The process in accordance with any of the preceding claims, wherein the poly(hydroxy acid) homo- or copolymer produced during the ring-opening-polymerization has a weight average molecular weight of 10,000 to 120,000 g/mol, preferably of 20,000 to 120,000 g/mol, more preferably of 40,000 to 120,000 g/mol, yet more preferably 60,000 to 120,000 g/mol, as determined by gel permeation chromatography, and/or wherein the poly(hydroxy acid) homo- or copolymer produced during the ring-opening-polymerization has a yellowness index below 40, preferably below 30, more preferably below 15, even preferably below 10, yet more preferably below 5 and most preferably less than 3.
